# EUROPÄISCHE PATENTSCHRIFT

(11) **EP 2 281 761 B1**
(45) Veröffentlichungstag und Bekanntmachung des Hinweises auf die Patenterteilung: **19.10.2011**
(21) Anmeldenummer: 09010011.6
(22) Anmeldetag: 03.08.2009
(51) Int. Cl.: B65G 15/00, B65G 21/10

(54) **Bandfördervorrichtung**
Belt transport device
Dispositif de transport de bande

(43) Veröffentlichungstag der Anmeldung: 09.02.2011
(73) Patentinhaber: Joseph Vögele AG, 67067 Ludwigshafen/Rhein (DE)
(72) Erfinder: Fickeisen, Steffen, 67098 Bad Dürkheim (DE); Neumann, Joschka, 68199 Mannheim (DE)
(74) Vertreter: Grünecker, Kinkeldey, Stockmair & Schwanhäusser

(56) Entgegenhaltungen:
- EP-A1- 0 548 661
- FR-A1- 2 821 833

## Beschreibung

Die Erfindung betrifft eine Bandfördervorrichtung der im Oberbegriff des Patentanspruchs 1 angegebenen Art.

An aus dem Produktprogramm 2009 der Firma JOSEPH VÖGELE AG, Neckarauerstr. 168-228, 68146 Mannheim / DE (Nr.: 2129266 DE / 02.09), Seiten 41 und 43 bekannten Baumaschinen in Form eines Straßenfertigers und eines Beschickers, oder bei aus der Praxis bekannten Straßenbelag-Fräsern ist jeweils zumindest eine Bandfördervorrichtung vorgesehen, die als Steigförderer ausgebildet ist und ein endloses Förderband enthält, das von innenliegenden Antriebs- und Umlenktrommeln sowie Tragrollen getragen wird. Die Antriebs-und Umlenkrollen und die Tragrollen sind in der Rahmenstruktur eingebaut, die gegebenenfalls allseitig verkleidet ist. Das Förderband kann ein Gummigurt, mit oder ohne Verstärkungen, ein Stahlband, oder ein anderes Förderband sein, das im Regelfall kein Schloss aufweist, sondern endlos ist. Das Förderband kann beispielsweise eine Weite von etwa 1,0 m haben und sich über eine Förderlänge von etwa 5,0 m oder mehr erstrecken, und ist sehr schwer und bei einem Förderbandwechsel relativ kompliziert zu handhaben. Bei Beschädigung oder zu starkem Verschleiß muss das Förderband gewechselt werden. Bei den bekannten Bandfördervorrichtungen wird zum Förderbandwechsel meist zunächst das defekte Förderband an zumindest einer Stelle getrennt und dann aus der Rahmenkonstruktion entfernt. Dazu müssen bereits Teile der Rahmenkonstruktion demontiert werden. Um ein Ersatz-Förderband einbauen zu können, müssen alle im Inneren des Förderbandes angeordneten Bauteile, d.h. die Antriebstrommel, die Umlenktrommel, die Tragrollen, und dgl., zunächst manuell ausgebaut werden, ehe das Ersatz-Förderband eingesetzt werden kann. Danach müssen alle diese Bauteile wieder eingebaut werden. Üblich ist es hierfür, die kompletten Anriebstrommel-Antriebsstationen, die Umlenktrommel-Stationen, und die Tragrollen-Stationen und dgl. komplett auszubauen. Ein Förderbandwechsel bedingt deshalb erhebliche Ausfallzeit der Bandfördervorrichtung und einen sehr hohen Montageaufwand.

FR 28 21833 A betrifft eine Bandfördervorrichtung zum Konditionieren von Lebensmittelprodukten. Zur leichteren Reinigung und zu einem Förderbandwechsel lässt sich die gesamte Rahmenkonstruktion, in der die Trommeln und längsversteifende Rohre und Seitenteile enthalten sind, und in der das Förderband läuft, um an einer Längsseite vorgesehene Gelenke um eine Achse nach oben schwenken, die parallel zur Förderebene und senkrecht zu den Achsen der Trommeln ist. Um das Band zu entspannen, kann ferner eine Endsektion der Rahmenkonstruktion, in welcher Endsektion die Umlenktrommel gelagert ist, um eine Achse hochgeklappt werden, die parallel zu den Trommelachsen und parallel zur Förderebene liegt. Die Verstellung in die Wechselposition wird manuell vorgenommen. Für Bandfördervorrichtungen von Baumaschinen, bei denen eine Trommel ein Gewicht von etwa 200 kg und das Förderband selbst ein Gewicht von etwa 150 kg haben, ist dieses Prinzip nicht zweckmäßig. FR2821833 A offenbart eine Bandfördervorrichtung gemäß dem Oberbegriff des Anspruchs 1.

Bei einer aus EP 0 548 661 A bekannten Bandfördervorrichtung zum Fördern von Stück-und Schüttgut, beispielsweise Süßwaren, wird die Rahmenkonstruktion der Bandfördervorrichtung mit einer Umlenktrommel, einer Antriebstrommel und weiteren Umlenkstangen oder Umlenktrommeln relativ zu einer stationär montierten Spannrolle um eine Achse seitlich hochgeschwenkt, die parallel zur Förderebene und senkrecht zu den Trommelachsen liegt. Die Umstellung in die Wechselposition wird manuell vorgenommen, in dem an Handgriffen der Rahmenkonstruktion angegriffen wird und die hochgeklappte Rahmenkonstruktion verriegelt wird. Zusätzlich kann das Förderband zum Bandwechsel dadurch entspannt werden, dass wenigstens eine Umlenktrommel durch einen Exzentermechanismus zuvor verschwenkt wird.

Der Erfindung liegt die Aufgabe zugrunde, eine Bandfördervorrichtung der eingangs genannten zu schaffen, bei der die Ausfallzeit und der Montageaufwand für einen Förderbandwechsel deutlich verkürzbar sind.

Die gestellte Aufgabe wird mit den Merkmalen des Patentanspruchs 1 gelöst.

Da zumindest die Antriebstrommel und die Umlenktrommel mittels der Stelleinrichtungen an der Rahmenkonstruktion in eine Wechselposition verstellbar sind, in der die jeweilige Trommel oder zumindest ein Trommelende zu einem Förderbandwechsel außerhalb des Förderkanals platziert ist, und die Stelleinrichtungen die Verstellbewegungen der Trommeln ausführen, brauchen weder die gesamten Stationen manuell ausgebaut und wieder eingebaut zu werden, noch ist hierbei exzessiver Montageaufwand erforderlich. Ein Förderbandwechsel lässt sich so zumindest zum Teil automatisieren. Da die Stelleinrichtungen die Wechselposition zumindest der jeweiligen Trommel, zweckmäßig auch der Tragrollen, einstellen, kann das Ersatz-Förderband schneller eingebaut werden als bisher und es wird die Ausfallzeit der Bandfördervorrichtung für den Förderbandwechsel drastisch verkürzt. Der bauliche Mehraufwand für die Stelleinrichtungen ist in der Bandfördervorrichtung vernachlässigbar, da einfache Komponenten für diese Aufgabe ausreichen, gegebenenfalls sogar ohnedies für den Betrieb benötigte Komponenten mitbenutzbar sind, und nur zumindest die Antriebstrommel und die Umlenktrommel so in die Rahmenkonstruktion eingebaut sein müssen, dass sie mit geringem Montageaufwand, gegebenenfalls ohne Spezialwerkzeuge, rasch lösbar und mittels der Stelleinrichtungen rasch aus der Betriebsposition in dem Förderband in die Wechselposition und aus dem Förderband heraus verstellbar sind, in der das Ersatz-Förderband bequem montierbar ist. Dabei ist entweder die jeweilige Trommel an einem Trommelende lösbar in die Rahmenkonstruktion eingebaut und am anderen Trommelende in der Rahmenkonstruktion um eine im Wesentlichen quer zur Trommelachse liegende Stellachse, vorzugsweise auf oder in Führungen der Rahmenkonstruktion geführt, in die Wechselposition schwenkbar, in der die Trommel entweder zur Gänze oder zumindest mit dem einen Trommelende außerhalb des Förderkanals positioniert ist. Dieser Verstellvorgang ist relativ zügig und mit geringem Montageaufwand ausführbar. Um zum Einsetzen des Ersatz-Förderbandes genügend Platz im Förderkanal zu schaffen, ist zweckmäßig in der Rahmenkonstruktion ein außerhalb des Förderkanals liegender, zum Förderkanal offener Ausweichraum für die jeweils in die Wechselposition verstellte Trommel vorgesehen. Dadurch lässt sich das schwere und kompliziert handhabbare Ersatz-Förderband bequem in den Förderkanal einbringen, ohne durch die in die Wechselposition verstellte Trommel oder in die Wechselposition verstellte Tragrollen behindert zu werden. Die Tragrollen werden im Übrigen zweckmäßig ähnlich wie die Trommeln in Wechselpositionen außerhalb des Förderkanals gebracht. Besonders einfach lassen sich sogenannte Girlanden-Tragrollen dadurch aus dem Förderkanal herausbringen, dass sie entweder an einem Ende ausgehängt und aus der Rahmenkonstruktion nach außen verlagert, oder zur Gänze ausgehängt werden. Auch zum Verstellen der Tragrollen können Stelleinrichtungen und Stelltriebe benutzt werden, um den Verstellaufwand hierfür zu verringern. Dann ist entweder das Ersatz-Förderband von außen über das eine Trommelende aufbringbar, und beim Zurückschwenken der Trommel in die Betriebsposition in den Förderkanal einbringbar, oder ist der Förderkanal durch die verschwenkte Trommel freigemacht, so dass das Ersatz-Förderband in den Förderkanal einsetzbar ist, ehe die Trommel wieder in die Betriebsposition und in das Förderband hineingeschwenkt wird. Im Übrigen kann das defekte Förderband unter Nutzen des durch das Verstellen der jeweiligen Trommel, und gegebenenfalls der Tragrollen, in die Wechselposition geschaffenen Freiraums leichter entfernt werden, gegebenenfalls ohne zerschnitten und mühsam ausgefädelt werden zu müssen. Anderenfalls kann es zweckmäßig sein, das defekte Förderband, wie bisher üblich, aufzutrennen und gegebenenfalls sogar in einzelne Sektion zu trennen und aus der Rahmenkonstruktion zu entnehmen, wobei die Trommeln und gegebenenfalls Tragrollen hierbei noch nicht notwendigerweise in die Wechselpositionen verstellt zu werden brauchen. Alternativ wird die jeweilige Trommel zunächst von der Rahmenkonstruktion gelöst und dann in Richtung der Trommelachse an in der Rahmenkonstruktion enthaltenen Führungseinrichtungen seitlich aus der Rahmenkonstruktion heraus in die Wechselposition verschoben. Die Gewichtslast der Trommel wird, nachdem diese von der Rahmenkonstruktion gelöst ist, über die Führungseinrichtungen in die Rahmenkonstruktion eingeleitet. Das Ersatz-Förderband oder ein Gebinde kann außerhalb des Förderkanals auf die in der Wechselposition befindliche Trommel aufgeschoben und dann mit der Trommel zurück in den Förderkanal gebracht werden, oder wird im Förderkanal positioniert, bevor die Trommel wieder in die Betriebsposition zurückgeschoben wird.

Es kann die jeweilige Trommel in der Wechselposition an zumindest einem Trommelende mit der Rahmenkonstruktion verbunden bleiben. Es muss zwar das beträchtliche Gewicht der Trommel bei deren Verstellung in die Wechselposition, und zurück, bewegt werden. Dies erfolgt jedoch in der Förderebene. Dafür werden die Stelleinrichtungen bzw. geeignete Stelltriebe benutzt. Jedoch wird die Gewichtslast der Trommel in der Wechselposition nach wie vor von der Rahmenkonstruktion getragen, so dass hierfür keine gesonderten Hebezeuge oder andere Hilfswerkzeuge, wie Winden oder Flaschenzüge, benötigt werden.

Um die Zeitdauer für einen Förderbandwechsel noch weiter zu verkürzen, wird bei einer zweckmäßigen Ausführungsform zumindest eine Trommel in der Wechselposition gleich gegen ein in die Rahmenkonstruktion einsetzbares Gebinde ersetzt, in welchem das Ersatz-Förderband auf einer Reserve-Antriebstrommel und/oder einer Reserve-Umlenktrommel aufgewickelt bereitgestellt ist, vorzugsweise einschließlich im Gebinde enthaltener Reserve-Tragrollen. Die zuvor benutzte Trommel wird in der Wechselposition ausgebaut. Da das Ersatz-Förderband in dem Gebinde bereits auf den Trommeln und um die Tragrollen korrekt platziert ist, entfällt das seitliche Aufbringen des Förderbandes auf die in der Wechselposition platzierte Trommel, was bei dem hohen Gewicht eines solchen Ersatz-Förderbandes zeitaufwändig und mühsam sein kann. Die ausgebaute Trommel kann zum Erstellen eines weiteren Gebindes für den nächsten Förderbandwechsel wieder verwendet werden. Günstig ist es, wenn die Stelleinrichtungen, vorzugsweise mechanisch oder hydraulisch betätigbare, Stellantriebe umfassen, die an zumindest einer Trommel oder einer zumindest eine Trommel enthaltenden, verstellbaren Sektion der Rahmenkonstruktion zum Stellangriff bringbar sind. Mit diesen Stellantrieben können auch die hohen Gewichtskräfte, die sich bei derart großen Bandfördervorrichtungen zumindest für die Trommeln oder die Sektionen nicht vermeiden lassen, problemlos aufgenommen und diese Baugruppen präzise und zügig bewegt werden.

Zweckmäßig sind zumindest einige der Stellantriebe der Stelleinrichtungen der Bandfördervorrichtung, die für den Förderbandwechsel eingesetzt werden, hydraulische Förderband-Spannzylinder der Bandfördervorrichtung. Diese Spannzylinder, die ohnedies im Betrieb der Bandfördervorrichtung gebraucht werden, erfüllen dann eine Doppelfunktion, weil sie auch für einen Förderbandwechsel eingesetzt werden.

Um einen Förderbandwechsel auch auf der Baustelle vornehmen zu können, kann es zweckmäßig sein, das Gebinde oder nur das Ersatz-Förderband in einem Magazin an der Bandfördervorrichtung oder der Baumaschine bereitzuhalten, d.h. zumindest dann mitzuführen, wenn sich aufgrund der geleisteten Betriebsstunden oder aus anderen Gründen ein baldiger Defekt des Förderbandes abzeichnen sollte.

Die Zeitdauer für einen Förderbandwechsel lässt sich besonders effizient verkürzen, wenn die Verstelleinrichtungen in die Bandfördervorrichtung integriert und halbautomatisch oder vollautomatisch betreibbar sind. Die Stelleinrichtungen assistieren beim Förderbandwechsel, so dass die Notwendigkeit entfällt, die jeweiligen Stationen komplett manuell aus- und einzubauen. Es kann allenfalls erforderlich sein, einige Verkleidungen oder Teile der Rahmenkonstruktion für einen Förderbandwechsel zu demontieren oder zumindest zu öffnen.

Die hydraulische Stellantriebe der Stelleinrichtungen werden zweckmäßig aus einem Hydrauliksystem der Bandfördervorrichtung und/oder der Baumaschine gespeist, und sind beispielsweise Hydraulikzylinder. Alternativ wäre es möglich, die Stelleinrichtungen mit einem eigenen Hydrauliksystem oder zumindest einer Hydraulik-Handpumpe auszustatten.

Alternativ könnte die jeweilige Trommel (Umlenktrommel oder Antriebstrommel) in etwa mittig in zwei Trommelteile unterteilt sein. Im Falle einer Antriebstrommel können für beide Trommelteile Antriebsmotoren vorgesehen sein, so dass keine Verbindungsachse zwischen den Trommelteilen erforderlich ist. Allerdings ist es alternativ möglich, die beiden Trommelteile über eine ausbaubare Verbindungsachse miteinander zu verbinden, solange die Trommel in der Betriebsposition ist, und gegebenenfalls nur einen Antriebsmotor vorzusehen. Eine vorgesehene Verbindungsachse wird zum Förderbandwechsel ausgebaut. Für einen Förderbandwechsel wird jeder Trommelteil in der Rahmenkonstruktion entweder um eine in etwa quer zur Trommelachse liegende Schwenkachse in die Wechselposition verstellt, oder in etwa in Richtung der Trommelachse nach außen aus dem Förderkanal in die Wechselposition verschoben, um das Ersatz-Förderband bequem in den Förderkanal einbringen zu können.

Alternativ ist es ferner möglich, die Wechselposition der Trommel dadurch zu definieren, dass wenigstens ein Wandbereich oder Abschnitt der Rahmenkonstruktion z.B. mittels der Stelleinrichtungen weggeklappt, oder sogar komplett abgebaut wird, um zumindest ein Trommelende zum Aufbringen des Ersatz-Förderbandes freizulegen.

Anhand der Zeichnungen werden Ausführungsformen des Erfindungsgegenstandes erläutert. Es zeigen:
- Fig. 1: eine schematische Seitenansicht einer als Straßenfertiger mit einer Bandför- dervorrichtung ausgebildeten Baumaschine,
- Fig. 2: eine schematische Seitenansicht einer mit einer Bandfördervorrichtung aus- gestatteten, als Beschicker ausgebildeten Baumaschine,
- Fig. 3: eine Seitenansicht eines Endabschnittes einer Bandfördervorrichtung, mit nicht gezeigten oder abgebauten Verkleidungen, im Bereich einer Antriebs- trommelstation, und in Betriebsposition,
- Fig. 4: eine Draufsicht zu Fig. 3,
- Fig. 5: eine Draufsicht, ähnlich der von Fig. 4, jedoch in einer Zwischenphase eines Förderbandwechsels,
- Fig. 6: eine Draufsicht, entsprechend der von Fig. 4, beim Förderbandwechsel,
- Fig. 7: eine schematische Frontansicht einer anderen Ausführungsform einer Band- fördervorrichtung,
- Fig. 8: eine schematische Perspektivdarstellung eines Details einer Bandfördervor- richtung in einer weiteren Ausführungsform,
- Fig. 9: eine schematische Perspektivdarstellung einer weiteren Ausführungsform ei- ner Bandfördervorrichtung,
- Fig. 10: eine schematische Perspektivdarstellung einer weiteren Ausführungsform ei- ner Bandfördervorrichtung,
- Fig. 11: eine schematische Perspektivdarstellung einer weiteren Ausführungsform ei- ner Bandfördervorrichtung,
- Fig. 12: eine schematische Perspektivdarstellung einer weiteren Ausführungsform ei- ner Bandfördervorrichtung,
- Fig. 13: eine schematische Seitenansicht eines Teils einer weiteren Ausführungsform einer Bandfördervorrichtung,
- Fig. 14: eine schematische Seitenansicht eines Teils einer weiteren Ausführungsform einer Bandfördervorrichtung,
- Fig. 15: eine schematische Perspektivdarstellung eines Teils einer weiteren Ausfüh- rungsform einer Bandfördervorrichtung,
- Fig. 16: eine schematische Perspektivdarstellung eines Teils einer weiteren Ausfüh- rungsform einer Bandfördervorrichtung,
- Fig. 17: eine schematische Seitenansicht einer weiteren Ausführungsform einer Band- fördervorrichtung,
- Fig. 18: ein perspektivisch angedeutetes Detail der Bandfördervorrichtung von Fig. 17,
- Fig. 19: in schematischer Perspektivdarstellung ein zum Durchführen eines Förder- bandwechsels in wenigstens einer der vorher gezeigten Ausführungsformen von Bandfördervorrichtungen vorbereitetes Gebinde,
- Fig. 20: in schematischer Perspektivdarstellung eine andere Ausführungsform eines vorbereiteten Gebindes,
- Fig. 21: eine schematische Seitenansicht eines für einen Förderbandwechsel vorberei- teten Gebindes einer anderen Ausführungsform, und
- Fig. 22: eine Seitenansicht einer anderen Ausführungsform eines für einen Förder- bandwechsel vorgesehenen Gebindes.

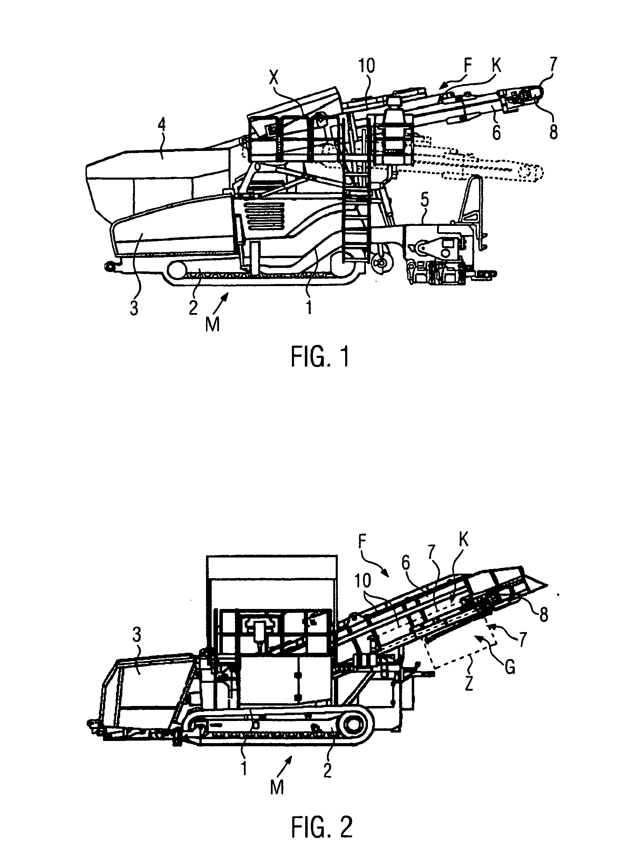

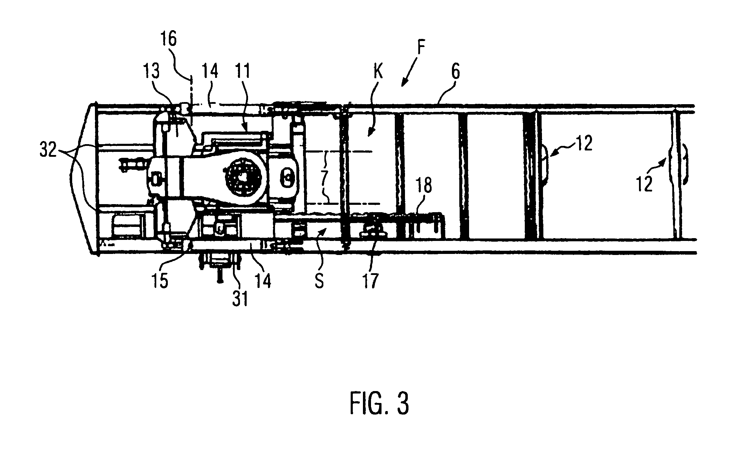

Anhand der Fig. 3 bis 6 wird eine Ausführungsform einer Bandfördervorrichtung F mit entweder permanent integrierten oder wahlweise einbaubaren Stelleinrichtungen S zum Durchführen eines Förderbandwechsels erläutert. Die Bandfördervorrichtung F ist beispielsweise in Baumaschinen M, wie Straßenfertigern, Beschickern oder Fräsern, integraler Maschinenbestandteil (Fig. 1 und 2), um Einbaumaterial (bituminöses, heißes Einbaumaterial oder Betoneinbaugutmaterial, oder abgetragenes Material) zu fördern. Die Bandfördervorrichtung F weist beispielsweise eine Weite von etwa 1,0 m und eine Förderlänge von etwa mindestens 5,0 m auf, und enthält ein endloses Förderband 7 (im Regelfall ohne Schloss), das ein verstärkter oder unverstärkter Gummigurt oder ein Stahlförderband oder dgl. sein kann.

Die in Fig. 1 gezeigte Baumaschine M ist ein Straßenfertiger mit einem Chassis 1, der auf einem Fahrwerk 2 auf einem Planum fährt und aus Einbaumaterial eine Deckenschicht bildet. In dem Chassis 1 ist ein Bunker 3, hier mit einem eingesetzten Bunkereinsatz 4, unter anderem auch für das Einbaumaterial, das mit einer Einbaubohle 5 eingebaut wird, angeordnet. Von dem Bunkereinsatz 4 führt die oberhalb des Chassis 1 in die Baumaschine M integrierte Bandfördervorrichtung F (Steigfördervorrichtung) bis über die Einbaubohle 5 hinweg, um Einbaumaterial aus einem zweiten Bunker X nach hinten, beispielsweise zu einem weiteren Straßenfertiger, zu transferieren. Die Bandfördervorrichtung F weist eine Rahmenkonstruktion 6 auf, in der ein Förderkanal K definiert ist, wobei das endlose Förderband 7 mit seinem oberen Fördertrum das Einbaumaterial durch den Förderkanal K bis in den Bereich eines Abwurfendes oder einer Umlenkstation 8 fördert. Die Rahmenkonstruktion 6 kann allseits Verkleidungen 10 tragen. Gegebenenfalls ist der Förderkanal K sogar beheizt (nicht gezeigt).

Die in Fig. 2 gezeigte Baumaschine M ist ein Beschicker, der einen nachfahrenden, nicht gezeigten Straßenfertiger mit Einbaumaterial beschickt. An dem auf dem Fahrwerk 2 fahrenden Chassis 1 ist ein Gutbunker 3 angeordnet, von dem die Bandfördervorrichtung F ansteigend nach hinten verläuft. Die Bandfördervorrichtung F enthält das endlose, gestrichelt angedeutete Förderband 7, das in dem Förderkanal K verläuft, der in der Rahmenkonstruktion 6 beispielsweise durch Verkleidungen 10 abgedeckt ist. Das Förderband 7 wird in einer Umlenkstation 8 umgelenkt. Eine ebenfalls vorgesehene Antriebstrommel-Station, beispielsweise am untenliegenden Ende der Bandfördervorrichtung F, ist nicht gezeigt. An der Unterseite der Bandfördervorrichtung F oder (nicht gezeigt) an der Baumaschine M kann ein Magazin Z vorgesehen sein, in welchem entweder ein Gebinde G oder nur ein ErsatzFörderband 7E für einen Förderbandwechsel bereithaltbar ist. Das Gebinde G kann, wie später erläutert wird, zumindest eine Trommel und das Ersatz-Förderband 7E umfassen.

In der Bandfördervorrichtung F in den Fig. 3 bis 6 vorgesehene Stelleinrichtungen S, die für einen Förderbandwechsel benutzt werden, wobei die Bandfördervorrichtung beispielsweise die in den Fig. 1 und 2 gezeigte Bandfördervorrichtung F, jedoch zur einfacheren Erläuterung ohne Verkleidungen 10, sein kann, sind entweder permanent in die Bandfördervorrichtung bzw. die Rahmenkonstruktion 6 eingegliedert, oder werden zumindest zum Teil nur für einen Förderbandwechsel an dafür vorbereiteten Montagepositionen eingebaut.

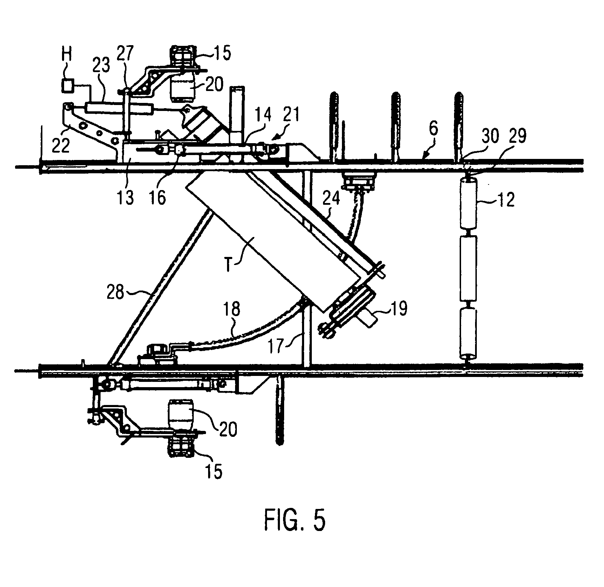

In den Fig. 3 bis 6 ist die Rahmenkonstruktion 6 aus Längs- und Vertikalstreben, und auch, vorzugsweise, schrägen Querstreben 28 aufgebaut und über an den Vorder- und Hinterenden vorgesehene Querteile ausgesteift. In der Rahmenkonstruktion 6 ist hier eine Antriebstrommel-Station 11 enthalten. Am anderen Ende der Rahmenkonstruktion 6 befindet sich eine Umlenkstation (nicht gezeigt). Dazwischen können gegebenenfalls mit Zwischenabständen Tragrollen 12 eingebaut sein, beispielsweise sogenannte Girlanden-Tragrollen (siehe Fig. 5). Das Förderband 7 wird in der in Fig. 3 gezeigten Betriebsposition auf Trommeln T in der Antriebstrommel-Station 11 (und der nicht gezeigten Umlenktrommel-Station) getragen und stützt sich zumindest mit dem obenliegenden Fördertrum auf den Tragrollen 12 ab (Muldenförderband).

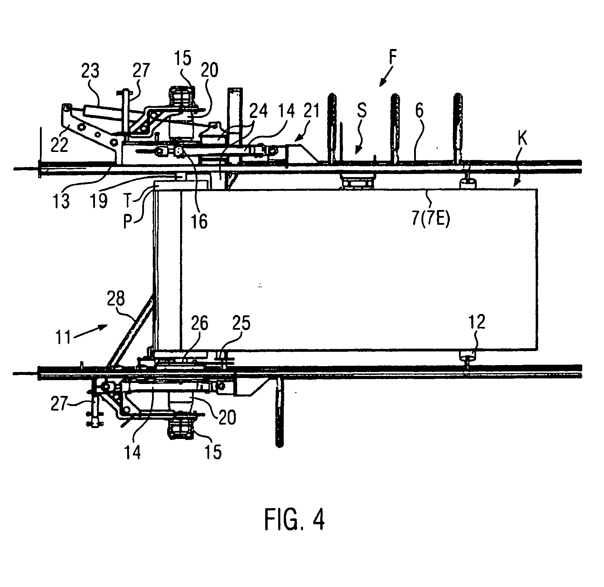

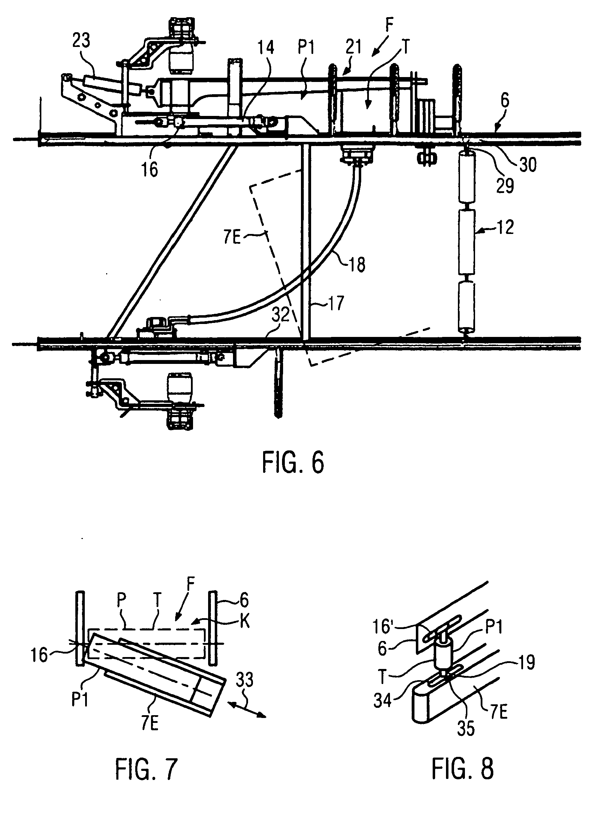

An jeder Seite der Antriebstrommel-Station 11 ist außenseitig in der Rahmenkonstruktion 6 ein Schlitten 13 montiert, der durch einen Förderband-Spannzylinder 14 (Hydraulikzylinder) in Längsrichtung verstellbar und beispielsweise in unteren Führungsschienen 32 der Rahmenkonstruktion 6 geführt und positioniert ist. An zumindest einer Seite der Rahmenkonstruktion 6, vorzugsweise an beiden Seiten der Rahmenkonstruktion, sind Antriebsmotoren 15 an Querkonsolen 27 (Fig. 3 und 4) der Schlitten 13 in Querrichtung verstellbar gelagert, die über beispielsweise ETP-Buchsen 20 mit einer Antriebswelle 19 der Trommel T gekuppelt sind. Die Trommel T ist mit ihrer Antriebswelle 19 in einem Rahmen 24 gelagert, der im Schlitten 13 an der in Fig. 4 obenliegenden Seite um eine hier vertikale bzw. im Wesentlichen quer zur Trommelachse liegende Stellachse 16 schwenkbar und über eine Kopplung 25 am anderen Ende mit einer Lagerung in dem dortigen Schlitten 13 verbunden ist. Für den Förderbandwechsel können in die Rahmenkonstruktion 6 ferner eine bogenförmige Führungsschiene 18 und eine querverlaufende Führungsschiene 17 eingesetzt werden. Die Führungsschienen 17, 18 sind entnehmbar. In diesem Bereich der Rahmenkonstruktion 6 sind die Vertikalstreben des Gitterrahmens nach außen geschweift, so dass ein zum innenliegenden Förderkanal K offener, jedoch außerhalb des Förderkanals K liegender Freiraum 21 zumindest an der Seite der Stellachse 16 gebildet wird, in den die Trommel T in eine Wechselposition P1 (Fig. 6) einschwenkbar ist, so dass sie vollständig aus dem Bereich des Förderkanals K herausverlagert ist. Unter beiden Schlitten 13 oder unter der bogenförmigen Führungsschiene 18 sind Hebekonsolen 31 seitlich in der Rahmenkonstruktion 6 angeordnet, die z.B. Spindelmotoren, Schraubspindeln oder Hydraulikzylinder als Stelltriebe enthalten, um zumindest den Rahmen 24 und/oder den Schlitten 13 aus den Führungsschienen 32 ausheben zu können, damit der Rahmen 24 um die Stellachse 16 schwenkbar ist.

An einer an der Rahmenkonstruktion 6 angebrachten Konsole 22 ist oder wird ein Stelltrieb 23 angebracht, z.B. ein Hydraulikzylinder, dessen anderes Ende an dem Rahmen 24 angelenkt ist. Der Rahmen 24, der Stelltrieb 23, die Führungsschienen 17, 18, die Hebekonsolen 31 gehören zu den Stelleinrichtungen S, die für einen Förderbandwechsel verwendet werden, der gegebenenfalls sogar halbautomatisch oder vollautomatisch durchgeführt werden kann.

In den Fig. 3 und 4 ist die Bandfördervorrichtung F in Betriebsposition gezeigt, und zwar entweder vor einem Förderbandwechsel oder nach einem Förderbandwechsel mit eingesetztem Förderband 7 bzw. Ersatz-Förderband 7E. Die Schlitten 13 und der Rahmen 24 sind beispielsweise über die Führungsschienen 32 positioniert, und mittels der Spannzylinder 14 in der Rahmenkonstruktion 6 verschiebbar. Die Antriebsmotoren 15 sind mit der Antriebswelle 19 der Trommel T gekuppelt. Die Hebekonsolen 31 sind abgesenkt. Der Stelltrieb 23 ist unbetätigt oder drucklos. Die Tragrollen 12 stützen das Fördertrum des Förderbandes 7.

Die Fig. 5 und 6 zeigen zwei Phasen bei einem Förderbandwechsel oder vorbereitend zu einem Förderbandwechsel. Im Übrigen ist in den Fig. 5 und 6 angedeutet, dass die Tragrollen 12, hier Girlanden-Tragrollen, mit Tragstrukturen 29 und lösbaren Bolzen 30 in der Rahmenkonstruktion 6 lösbar oder zumindest an einem Ende lösbar eingebaut sind. Durch Entfernen der Verriegelungsbolzen 30 können die Tragrollen 12 für einen Förderbandwechsel aus dem Förderkanal herausverlagert werden.

Im Falle eines Defektes oder zu starken Verschleißes des Förderbandes 7 wird ein Förderbandwechsel fällig. Das defekte Förderband 7 wird entweder aufgetrennt oder mehrfach zerschnitten und aus dem Förderkanal entfernt, oder es werden hierfür die Trommeln T und die Tragrollen 12 in Wechselpositionen außerhalb des Förderkanals verlagert, um das defekte Förderband unzerschnitten entnehmen zu können.

Vorbereitend zumindest zum Einsetzen des Ersatz-Förderbandes 7E wird (Fig. 5) zunächst die Führungsschiene 17 und auf dieser die Führungsschiene 18 in die Rahmenkonstruktion 6 eingelegt. Dann wird die Antriebsverbindung der Antriebsmotoren 15 über z.B. sogenannte ETP-Buchsen 20 mit der Antriebswelle 19 der Trommel T gelöst, und werden die Antriebsmotoren 15 mit den ETP-Buchsen 20 auf den Konsolen 27 gemäß Fig. 5 nach außen verstellt. Hierfür können sogar nicht gezeigte Stelltriebe der Stelleinrichtungen S benutzt werden. Dann werden mittels der Hebekonsolen 31 Führungsschienen oder direkt die Schlitten 13 angehoben, bis der Rahmen 24 zum Verschwenken um die Stellachse 16 entkoppelt ist. Der Stelltrieb 23 wird betätigt, um den Rahmen 24 mit der Trommel T um die Stellachse 16 zu verschwenken, wobei die Trommel T zumindest auf der Führungsschiene 18 geführt wird. Der Stelltrieb 23 ist beispielsweise ein Hydraulikzylinder, der an ein Hydrauliksystem H entweder der Bandfördervorrichtung (die Antriebsmotoren 15 sind zweckmäßig ebenfalls Hydraulikmotoren) oder der Baumaschine M angeschlossen ist, und über nicht gezeigte Steuerventile betätigt wird.

Die Trommel T wird über die in Fig. 5 gezeigte Zwischenposition bis in eine endgültige Wechselposition P1 in den Freiraum 21 hineingeschwenkt (Fig. 6), in der die Trommel T vollständig aus dem Förderkanal K ausgetreten ist. Danach können die Tragrollen 12 gelöst und ebenfalls aus dem Förderkanal K herausverlagert oder zur Gänze demontiert werden. Zum Bewegen der Bolzen 30 können gegebenenfalls ebenfalls Stelltriebe eingesetzt werden. In der Folge (Fig. 6) werden die Führungsschienen 17 und 18 aus der Rahmenkonstruktion 6 entnommen, und wird das Ersatz-Förderband 7E, z.B. mit einem Hebezeug oder Flaschenzügen, beispielsweise von unten in den Förderkanal K eingebracht (Fig. 6, in gestrichelten Linien angedeutet), und zwar so, dass die Beuge des Ersatz-Förderbandes 7E offen ist. Danach wird die Trommel T mittels des Stelltriebes 23 über die in Fig. 5 gezeigte Zwischenlage in das Ersatz-Förderband 7E hinein und schließlich bis in die in Fig. 4 gezeigte Betriebsposition geschwenkt. Dabei kann das Ersatz-Förderband 7E bequem ordnungsgemäß auf der Trommel T positioniert werden. Beim Zurückschwenken der Trommel T können vorübergehend die Führungsschienen 17, 18 im Inneren der Schlaufe des Ersatz-Förderbandes 7E wieder in die Rahmenkonstruktion 6 eingesetzt werden. Dann wird der Rahmen 24 wieder mit beiden Schlitten 13 gekuppelt und werden nach Entnahme der Führungsschienen 17, 18 die Schlitten 13 über die Hebekonsolen 31 abgesenkt, bis sie wieder ordnungsgemäß mit den Führungsschienen 32 verriegelt sind. In der Folge werden die Antriebsmotoren 15 auf den Konsolen 27 wieder nach innen verstellt und mit der Antriebswelle 19 der Trommel gekuppelt. Danach oder bereits zuvor können die Tragrollen 12 zwischen den beiden Trumen des Ersatz-Förderbandes 7E in der Rahmenkonstruktion 6 verankert werden.

Bei der in den Fig. 3 bis 6 nicht gezeigten Umlenktrommel-Station wird mit dort vorgesehenen oder eingebauten Stelleinrichtungen entsprechend verfahren, wobei gegebenenfalls in der Umlenktrommel-Station keine Antriebsmotoren vorgesehen sind, so dass die Manipulation einfacher ist. Abschließend wird das Ersatz-Förderband 7E mittels der Spannzylinder 14 entsprechend gespannt, werden die Verkleidungen wieder an der Rahmenkonstruktion 6 angebracht, falls erforderlich, und kann die Bandfördervorrichtung F wieder in Betrieb genommen werden.

Bei der alternativen Ausführungsform der Bandfördervorrichtung F in Fig. 7 weist die Rahmenkonstruktion 6 gegebenenfalls stabile Seitenwände auf, in denen die Trommel T in der gestrichelt dargestellten Betriebsposition P drehbar gelagert ist. Ein Trommelende ist um die in etwa senkrecht zur Trommelachse verlaufende, hier im Wesentlichen horizontale Stellachse 16' in einer Seitenwand schwenkbar gelagert, während das andere Trommelende mit der anderen Seitenwand lösbar verbunden ist. Für einen Förderbandwechsel wird das lösbare Trommel-ende gelöst und wird die Trommel T mittels eines Stelltriebes entsprechend dem Stelltrieb 23 von Fig. 6 nur um einige Winkelgrade um die Stellachse 16' nach unten abgesenkt, bis das lösbare Trommelende aus dem Förderkanal K herausgetreten ist. In dieser Wechselposition P1 wird das Ersatz-Förderband 7E in Richtung des Doppelpfeiles 33 auf die Trommel T aufgezogen. Dann wird die Trommel T um die Stellachse 16' hochgeschwenkt und wieder ordnungsgemäß befestigt. Das Ersatz-Förderband 7E kann dann per Hand oder per nicht gezeigtem Seilzug oder mit Hilfe der Antriebstrommel in die Rahmenkonstruktion eingezogen werden.

In der Ausführungsform in Fig. 8 ist die Trommel T aus der Betriebsposition um etwa 90° um die Stellachse 16' in der Rahmenkonstruktion 6 nach unten in die Wechselposition P1 schwenkbar, nachdem ein Trommelende aus der Rahmenkonstruktion gelöst wurde. Diese Schwenkbewegung kann durch einen Stelltrieb ähnlich dem Stelltrieb 23 in Fig. 6 ausgeführt werden. Am unteren Ende der Antriebswelle 19 der Trommel T kann ein Blech 34 verdrehbar angeordnet sein, das beim Aufbringen des Ersatz-Förderbandes 7E auf die Trommel T in der in Fig. 8 gezeigten Position orientiert ist. Sobald das Ersatz-Förderband 7E weit genug nach oben über die Trommel T gebracht worden ist, wird das Blech 34 in Richtung des Doppelpfeiles 35 auf der Antriebswelle 19 der Trommel T um etwa 90° verdreht, so dass beide Ränder des aufgebrachten Ersatz-Förderbandes 7E auf dem Blech 34 aufstehen. Danach wird die Trommel T mit dem aufgebrachten Ersatz-Förderband wieder hochgeschwenkt und festgelegt.

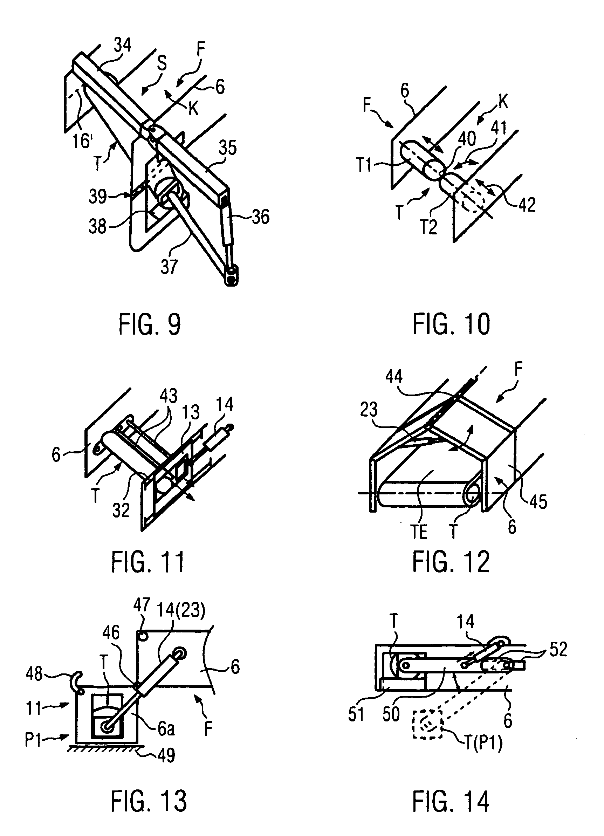

In der Ausführungsform in Fig. 9 ist an der Rahmenkonstruktion 6 der Bandfördervorrichtung F als Teil der Stelleinrichtungen S ein Querträger 34 oberhalb des Förderkanals permanent oder nur für einen Förderbandwechsel angebracht, an welchem ein Kranbalken 35 schwenkbar angeordnet ist. An dem außenliegenden Ende des Kranbalkens 35 ist ein Hydraulikzylinder 36 angelenkt. Zum Förderbandwechsel wird auf die Trommel T von einem Trommelende her ein Hohlrohr aufgesteckt oder eine Stange 37 eingesteckt. Das freie Ende der Stange 37 wird mit dem Hydraulikzylinder 36 verbunden. Nach Beaufschlagen des Hydraulikzylinders 36 lässt sich der untere Teil einer Führung oder Lagerung dieses Trommelendes ausbauen, um einen Freiraum zu schaffen. Mittels des Hydraulikzylinders 36 wird die Trommel um die hier beispielsweise im Wesentlichen horizontale Stellachse 16' nach unten geschwenkt, bis das Trommelende oder die Stange 37 auf einer Stütze 38 aufliegt, die beispielsweise in der Rahmenkonstruktion 6 um ein Gelenk 39 klappbar sein kann. Der Hydraulikzylinder 36 wird dann gelöst. Der Kranbalken 35 wird zur Seite geschwenkt. Nun kann das Ersatz-Förderband 7E auf die Stange oder das Hohlrohr 37 aufgeschoben werden, wonach der Kranbalken 35 wieder ausgeschwenkt und der Hydraulikzylinder 36 wieder mit dem freien Ende der Stange 37 verbunden wird. Danach wird die Trommel T durch den Hydraulikzylinder 36 zumindest etwas nach oben geschwenkt, damit das Ersatz-Förderband 7E leicht vollständig auf die Trommel T geschoben werden kann. Zu diesem Zweck ist die Stütze 38 so angeordnet, dass an einer Seite ein offenes Maul zum Einbringen des Ersatz-Förderbandes 7E geschaffen ist. Danach wird die Trommel T mittels des Hydraulikzylinders 36 vollständig angehoben, so dass die unteren Führungseinrichtungen des Trommelendes wieder eingebaut werden können. Dann wird das Rohr 37 abgenommen und wird der Kranbalken 35 wieder beigeschwenkt.

Bei der Ausführungsform in Fig. 10 ist die jeweilige Trommel T in etwa mittig in zwei Trommelteile T1, T2 unterteilt, die von der Rahmenkonstruktion 6 jeweils zur Mitte in den Förderkanal K vorstehen. Falls es sich um die Antriebstrommel-Station handelt, können beide Trommelteile T1, T2 gesonderte, außenliegende Antriebsmotoren aufweisen, und/oder werden die beiden durch nur einen außenliegenden Antriebsmotor antreibbaren Trommelteile T1, T2 durch eine ausbaubare Verbindungsachse 40 miteinander gekoppelt. Die beiden Trommelteile T1, T2 sind in der Rahmenkonstruktion 6 (nach Ausbau der gegebenenfalls vorgesehenen Verbindungsachse 40) entweder in Richtung der Doppelpfeile 41 oder in Richtung der Doppelpfeile 42 in die Wechselpositionen verstellbar, und zwar entweder verschwenkbar oder in Richtung der Trommelachse verschiebbar, um den Förderkanal K zum Einbringen des Ersatz-Förderbandes 7E freimachen zu können.

Bei der Ausführungsform in Fig. 11 ist die Trommel T auf in der Rahmenkonstruktion 6 angeordneten Führungen 43 (z.B. eine Rundführung und eine Flachführung) zur Seite aus der Rahmenkonstruktion 6 herausschiebbar, z.B. mittels eines nicht gezeigten Stelltriebs, und beispielsweise relativ zum Schlitten 13, an dem der Spannzylinder 14 angreift, und an dem der Antriebsmotor und dgl. (nicht gezeigt) angeordnet sind. Dann kann das Ersatz-Förderband 7E eingebracht werden, ehe die Trommel T auf den Führungen 43 wieder in die in Fig. 11 gezeigte Betriebsposition zurückgeschoben wird.

Bei der Ausführungsform in Fig. 12 ist die Trommel T auf der rechten Seite lösbar mit der Rahmenkonstruktion 6 verbunden. Zum Förderbandwechsel wird ein vorderer Teil der Rahmenkonstruktion 6 oder einer Verkleidung oder Seitenwand 45 um eine Stellachse 44 mittels zumindest eines Stelltriebes 23 in Richtung des Doppelpfeiles hochgeklappt. Die Trommel T bleibt einseitig auskragend in dieser Position, da sie im verbleibenden Teil der Rahmenkonstruktion 6 abgestützt ist. Über das somit freigelegte eine Trommelende wird das Ersatz-Förderband 7E in den Förderkanal K eingebracht. Dann wird die Rahmenkonstruktion 6 bzw. die Verkleidung 45 wieder um die Stellachse 44 zurückgeschwenkt und wird das Trommelende wieder ordnungsgemäß festgelegt. Alternativ könnten beide Seiten der Rahmenkonstruktion wahlweise hochgeklappt werden.

Bei der in Fig. 13 gezeigten Ausführungsform weist die Rahmenkonstruktion 6 beispielsweise im Bereich der Antriebstrommel-Station 11 (oder der Umlenktrommel-Station) eine Sektion 6a auf, die um eine Stellachse 46 zusammen mit der Trommel T in die Wechselposition P1 nach unten verlagerbar ist, beispielsweise mittels der Spannzylinder 14 und/oder Stelltriebe 23. In der Wechselposition P1 liegt die Trommel T entweder auf dem Boden 49 oder auf einer entsprechenden Arbeitsfläche. Die Sektion 6a ist abklappbar, nachdem Verriegelungen 48 von Verankerungen 47 der Rahmenkonstruktion 6 gelöst wurden. In der Wechselposition P1 wird entweder ein Trommelende freigelegt oder wird die Trommel T komplett demontiert, damit das Ersatz-Förderband 7E aufgezogen werden kann. Alternativ kann anstelle der demontierten Trommel T eine Reserve-Trommel TE mit darauf aufgewickeltem Ersatz-Förderband 7E eingebaut werden, ehe die Sektion 6a wieder um die Stellachse 46 nach oben geschwenkt und am verbleibenden Teil der Rahmenkonstruktion 6 verriegelt wird.

Bei der Ausführungsform in Fig. 14 werden die Spannzylinder 14 auch als Stelltriebe zum Verstellen der Trommel T der Antriebstrommel-Station in die Wechselposition P1 genutzt. Die Trommel T ist an beiden Trommelenden an Hebelarmen 50 drehbar gelagert, deren andere Enden in Dreh-Schubgelenken 52 in der Rahmenkonstruktion 6 befestigt sind. Ein ähnliches Prinzip könnte in der Umlenktrommel-Station für die dortige Trommel T vorgesehen sein. Da die Umlenk-Trommel nicht notwendigerweise zum Spannen des Förderbandes verstellt zu werden braucht, können dort zwei Hebelarme 50 nur in Drehgelenken in der Rahmenkonstruktion 6 gelagert sein, und die Hebelarme über beiderseitiae Stelltriebe 23 mit der Trommel T in die Wechselposition P1 verschwenkt werden, nachdem die Trommel aus ihren Führungen und Drehlagerungen gelöst, und auch der gegebenenfalls nur einzige Antriebsmotor abgebaut worden ist. In der Rahmenkonstruktion 6 ist im Übrigen ein für einen Förderbandwechsel ausbaubarer Führungsteil 51 vorgesehen.

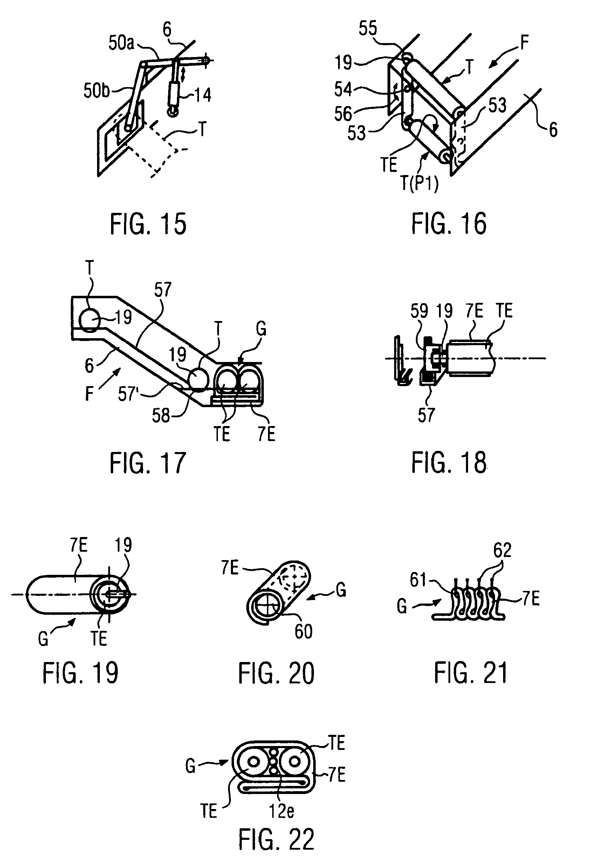

In der Ausführungsform in Fig. 15 wird die Trommel T ähnlich wie in Fig. 14 mittels der Spannzylinder 14 in die Wechselposition verstellt, wobei, falls dies an der Umlenktrommel-Station erfolgt, hierfür Stelltriebe 23 an beiden Seiten vorgesehen werden. An der Antriebstrommel-Station können hierfür die Spannzylinder 14 benutzt werden. Anstelle nur eines Hebelarmes 50 an jeder Seite sind hier nach Art eines Kniegelenks zwei Hebelarme 50a, 50b pro Seite vorgesehen. In den Fig. 14 und 15 können die Hebelarme 50 bzw. 50a, 50b an den Innenseiten der Rahmenkonstruktion 6 oder an deren Außenseiten platziert sein.

In der Ausführungsform der Bandfördervorrichtung F in Fig. 16 wird in der Rahmenkonstruktion 6 an jeder Seite der Trommel T ein Wechselmagazin 53 um eine Achse 54 in der Rahmenkonstruktion 6 schwenkbar innenseitig angeordnet (entweder permanent oder nur für den Förderbandwechsel), um die beidendig gelöste Trommel über die Antriebswelle 19 aus der (obenliegenden) Betriebsposition nach unten in die Wechselposition P1, beispielsweise über 180° in Richtung des Doppelpfeiles 56 zu verstellen, beispielsweise mittels nicht gezeigter Stelltriebe 23. Die Wechselmagazine 53 sind an ihren Enden als Greifer 55 ausgebildet, mit denen die Antriebswelle 19 lösbar in Eingriff bringbar ist, so dass die in die Wechselposition P1 verschwenkte Trommel entnehmbar und beispielsweise durch eine Reserve-Trommel TE mit darauf aufgewickeltem Ersatz-Förderband 7E ersetzbar ist. Anderenfalls kann die in die Wechselposition P1 verstellte Trommel T an zumindest einem Trommelende aus einem Wechselmagazin 53 gelöst werden, um das Ersatz-Förderband 7E aufbringen zu können.

Bei der Ausführungsform der Bandfördervorrichtung F in Fig. 17 (Steigförderer) ist in der Rahmenkonstruktion 6 an beiden Innenseiten jeweils eine Führungsschiene 57 angeordnet, die sich über die Betriebspositionen der Trommeln T (in der Antriebstrommel-Station und der Umlenktrommel-Station) hinweg erstreckt, und über eine Schienenweiche 58 mit einem Führungsschienenabschnitt 57' zu einer Entnahmeöffnung der Rahmenkonstruktion 6 geführt ist.

In Fig. 18 kann die jeweilige Trommel T (oder eine Reserve-Trommel TE mit dem Ersatz-Förderband 7E) mit ihrer Antriebswelle 19 an beiden Enden beispielsweise über Gleitschuhe 59 oder dgl. in den Führungsschienen 57, 57' verschoben werden.

In Fig. 17 ist für einen Förderbandwechsel beispielsweise ein Gebinde G vor oder in einem Ende der Förderstrecke platziert. Das Gebinde G enthält beispielsweise zwei Reserve-Trommeln TE und das darauf aufgewickelte Ersatz-Förderband 7E. Das Gebinde G kann in einem Käfig oder Kasten oder einer Gitterbox enthalten sein, um beispielsweise durch einen Gabelstapler seitlich oder in Längsrichtung bequem manipuliert zu werden. Für deren Förderbandwechsel wird beispielsweise die Trommel T in der Umlenktrommel-Station (in Fig. 17 unten) von der Rahmenkonstruktion 6 gelöst und über den Abschnitt 57' der Führungsschienen 57 aus der Rahmenkonstruktion 6 herausgeschoben. Hierfür wird die Schienenweiche 58 benutzt. Danach wird die Schienenweiche 58 umgestellt und wird von der Trommel T in der Antriebstrommel-Station (in Fig. 17 beispielsweise umliegend) ein Zuggurt zu der Reserve-Trommel TE im Gebinde G gezogen und daran befestigt. Mit dem Motor der nach wie vor eingebauten Antriebstrommel wird über den Zuggurt die Reserve-Antriebstrommel TE in den Führungsschienen 57 nach oben gezogen. Die eingebaute Trommel T in der Antriebstrommel-Station wird dann gelöst und entweder von einem Ende der Bandfördervorrichtung F durch einen Gabelstapler herausgehoben oder entlang der Führungsschienen 57 herausgezogen. Danach wird die Reserve-Trommel TE in der Betriebsposition eingebaut und festgelegt. Schließlich wird die Reserve-Trommel TE der Umlenktrommel-Station entlang der Führungsschienen 57 in die Betriebsposition geschoben und eingebaut.

Fig. 19 zeigt schematisch ein Gebinde G, das beispielsweise in dem Magazin Z in Fig. 2 an der Bandfördervorrichtung F oder der Baumaschine M bereitgehalten werden kann. Es handelt sich um eine Reserve-Trommel TE, beispielsweise für die Antriebstrommel-Station oder die Umlenktrommel-Station, und das darauf aufgewickelte Ersatz-Förderband 7E. Dabei ist darauf zu achten, dass das Ersatz-Förderband nicht geknickt wird, beispielsweise indem ein zusätzliches Rohr eingelegt wird. Beim Förderbandwechsel wird die Reserve-Trommel TE gegen die ursprünglich eingebaute Trommel T gewechselt.

In Fig. 20 ist das Gebinde G dadurch gebildet, dass das Ersatz-Förderband 7E auf eine stabförmige Konstruktion 60 knickfrei aufgebracht ist. Beim Förderbandwechsel wird das Ersatz-Förderband 7E auf die zuvor eingebaute Trommel aufgebracht.

In Fig. 21 ist das Gebinde G nur aus dem Ersatz-Förderband 7E gebildet, das beispielsweise wie gezeigt um Stäbe 61 gefaltet ist, die über Rollen 62 in Schienen in der Rahmenkonstruktion 6 der Bandfördervorrichtung F bequem verschoben werden können.

In Fig. 22 ist schließlich ein Gebinde G angedeutet, das nicht nur das teilweise aufgewickelte und gefaltete Ersatz-Förderband 7E umfasst, sondern auch zwei Reserve-Trommeln TE sowie gegebenenfalls Reserve-Tragrollen 12E enthält. Bei einem Förderbandwechsel werden die zuvor eingebauten Trommeln T ersetzt, wie gegebenenfalls auch die zuvor eingebauten Tragrollen 12.

## Patentansprüche

1. Bandfördervorrichtung (F) für Baumaschinen (M) wie Straßenfertiger, Beschicker, Fräser, mit einem endlosen Förderband (7), das in einer Förderebene der Bandfördervorrichtung (F) in einem Förderkanal (K) von im Förderband (7) innenliegenden Antriebs- und Umlenktrommeln (T), und gegebenenfalls Tragrollen (12), getragen wird, die in einer den Förderkanal (K) begrenzenden und das Förderband (7) zumindest an beiden Randseiten umschließenden Rahmenkonstruktion (6) eingebaut sind, **dadurch gekennzeichnet, dass** zumindest die Antriebs- und Umlenktrommeln (T) mittels in die Rahmenkonstruktion (6) integrierter oder in diese einbaubarer Stelleinrichtungen (S) an der Rahmenkonstruktion (6) in je eine Wechselposition (P1) und aus dem Förderband (7) heraus verstellbar sind, in der zu einem Förderbandwechsel die jeweilige Trommel (T) oder zumindest ein Trommelende außerhalb des Förderkanals (K) platziert ist, und dass die jeweilige Trommel (T) entweder an einem Trommelende lösbar in die Rahmenkonstruktion (6) eingebaut und am anderen Trommelende in der Rahmenkonstruktion (6) um eine in der Rahmenkonstruktion (6) im Wesentlichen quer zur Trommelachse liegende und zur Förderebene im Wesentlichen senkrechte Stellachse (16) parallel zur Förderebene aus dem Förderband (7) in die Wechselposition (P1) schwenkbar ist, in der die Trommel (T) in einen in der Rahmenkonstruktion (6) außerhalb des Förderkanals (K) liegenden, zum Förderkanal (K) offenen Ausweichraum (21) außerhalb des Förderkanals (K) positioniert ist, oder von der Rahmenkonstruktion (6) lösbar und in Richtung der Trommelachse und parallel zur Förderebene an in der Rahmenkonstruktion (6) enthaltenen Führungen (43) seitlich aus der Rahmenkonstruktion (6) und dem Förderband (7) heraus in die Wechselposition (P1) außerhalb des Förderkanals (K) verschiebbar ist.

2. Bandfördervorrichtung nach Anspruch 1, **dadurch gekennzeichnet, dass** zumindest eine Trommel (T) in der Wechselposition (P) zum Förderbandwechsel gegen ein in die Rahmenkonstruktion (6) einsetzbares Gebinde (G) ersetzbar ist, in welchem ein Ersatzförderband (7E) auf einer Reserve-Antriebstrommel (T) und/oder einer Reserve-Umlenktrommel (T) aufgewickelt bereitgestellt ist, vorzugsweise einschließlich im Gebinde (G) enthaltener Reserve-Tragrollen (12E).

3. Bandfördervorrichtung nach wenigstens einem der vorhergehenden Ansprüche, **dadurch gekennzeichnet, dass** die Stelleinrichtungen (S), vorzugsweise mechanisch oder hydraulisch betätigbare, Stellantriebe (14, 23) umfassen, die an zumindest einer Trommel (T) zum Stellangriff bringbar sind.

4. Bandfördervorrichtung nach Anspruch 3, **dadurch gekennzeichnet, dass** zumindest einige der Stellantriebe (14) der Stelleinrichtungen (S) für den Förderbandwechsel die hydraulischen Förderband-Spannzylinder der Bandfördervorrichtung (F) sind.

5. Bandfördervorrichtung nach Anspruch 2, **dadurch gekennzeichnet, dass** das Gebinde (G) oder nur das Ersatz-Förderband (7E) in einem Magazin (Z) an der Bandfördervorrichtung (F) oder der Baumaschine (M) bereitgehalten wird.

6. Bandfördervorrichtung nach Anspruch 1, **gekennzeichnet durch** halbautomatisch oder vollautomatisch betreibbare, permanent oder bedarfsweise in die Bandfördervorrichtung (F) integrierte Förderbandwechsel-Stelleinrichtungen (S).

7. Bandfördervorrichtung nach Anspruch 6, **dadurch gekennzeichnet, dass** die Stellantriebe (14, 23) der Stelleinrichtungen (S) aus einem Hydrauliksystem (H) der Bandfördervorrichtung (F) und/oder der Baumaschine (M) gespeiste Hydraulikzylinder sind.

8. Bandfördervorrichtung nach Anspruch 1, **dadurch gekennzeichnet, dass** zum Abstützen der Trommel (T) zumindest beim Schwenken in die Wechselposition (P1) in den Ausweichraum (21) unter der Trommel (T) in die Rahmenkonstruktion (6) einsetzbare Führungen (17, 18) vorgesehen werden.

9. Bandfördervorrichtung nach wenigstens einem der vorhergehenden Ansprüche, **dadurch gekennzeichnet, dass** in der Wechselposition (P1) ein Trommelende durch wenigstens einen weggeklappten oder abgebauten Wandbereich (45) der Rahmenkonstruktion (6) freilegbar ist.

## Claims

1. Belt conveyor device (F) for construction machines (M), such as road finishing machines, feeding machines, milling machines, comprising a continuous conveyor belt (7) carried in a conveying plane within a conveying duct (K) on drive and tail pulleys (T) arranged inside the conveyor belt (7), and, optionally, on support rollers (12), installed in a frame structure (6) defining the conveying duct (K) and enclosing the conveyor belt (7) at least at both edge sides, **characterised in that** at least drive and tail pulleys (T) are movable by adjustment means (S) which either are integrated or mounted into the frame structure (6) to a replacement position (P1) out of the conveyor belt (7), in which replacement position (P1) for a conveyor belt replacement the respective pulley (T) or at least one pulley end is placed outside the conveying duct (K), that the respective pulley (T) either is mounted detachably at one pulley end in the frame structure (6) and is swivable parallel to the conveying plane out of the conveyor belt (7) in the frame structure (6) at the other pulley to the replacement position (P1) about an adjusting axle (16) located in the frame structure (6) essentially transverse to the pulley axle and perpendicular to the conveying plane, in which replacement position (P1) the pulley (T) is positioned outside the conveying duct (K) in a turn-out space (21) provided outside the conveying duct (K) in the frame structure (6) and being open towards the conveying duct (K), or is detachable from the frame structure (6) to be laterally shifted out of the frame structure (6) into the replacement position (P1) outside the conveying duct (K) in the direction of the pulley axle and parallel to the conveying plane on guide means (43) contained in the frame structure (6).

2. Belt conveyor device according to claim 1, **characterised in that** at least one pulley (T) when in the replacement position (P1) for a conveyor belt replacement can be replaced by a replacement components pack (G) that can be inserted into the frame structure (6), in which pack (G) a spare conveyor belt (7E) reeled on a reserve drive pulley (T) and/or reeled on a reserve tail pulley (T) is held ready, preferably including reserve support rolls (12E) also contained in the replacement components pack (G).

3. Belt conveyor device according to at least one of the preceding claims, **characterised in that** the adjustment means (S) comprise preferably mechanically or hydraulically actuable adjustment drives (14, 23) which can be brought into adjusting engagement at at least one pulley (T).

4. Belt conveyor device according to claim 3, **characterised in that** at least some of the adjustment drives (14) of the adjustment means (S) used for a conveyor belt replacement are hydraulic conveyor belt tensioning cylinders of the belt conveyor device (F).

5. Belt conveyor device according to claim 2, **characterised in that** the replacement components pack (G) or only the spare conveyor belt (7E) are held ready in a magazine (Z) at the belt conveyor device (F) or at the construction machine (M).

6. Belt conveyor device according to claim 1, **characterised by** semi-automatically or fully automatically actuable conveyor belt replacement adjustment means (S) that are integrated in the belt conveyor device permanently or upon demand.

7. Belt conveyor device according to claim 6, **characterised in that** the adjustment drives (14, 23) of the adjustment means (S) are hydraulic cylinders supplied from a hydraulic system (H) of the belt conveyor device (F) and/or of the construction machine (M).

8. Belt conveyor device according to claim 1, **characterised in that** for supporting the respective pulley (T) at least while pivoting the pulley (T) to the replacement position (P1) into the turn-out space (21) guidances (17, 18) are provided which can be inserted into the frame structure (6).

9. Belt conveyor device according to at least one of the preceding claims, **characterised in that** in the replacement position (P1) one pulley end can be exposed by at least folding away or removing one wall region (45) of the frame structure (6).

## Revendications

1. Convoyeur à bande (F) pour des engins de chantier (M) tels que des finisseuses de routes, des chargeuses mécaniques, des fraiseuses, avec un tapis convoyeur sans fin (7) qui est porté dans un plan de transport du convoyeur (F) dans un conduit de transport (K) par des tambours d'entraînement et de renvoi (T), et éventuellement des rouleaux porteurs (12) prévus à l'intérieur du tapis (7), qui sont montés dans une construction de châssis (6) qui délimite le conduit de transport (K) et entoure au moins sur les deux côtés du bord le tapis (7), **caractérisé en ce que** les tambours d'entraînement et de renvoi (T), au moins, sont aptes à être amenés, à l'aide de dispositifs de déplacement (S) intégrés dans la construction de châssis (6) ou aptes à être montés dans celle-ci, dans une position de changement (P1) et hors du tapis (7), dans laquelle le tambour (T) correspondant ou au moins une extrémité du tambour est placé à l'extérieur du conduit de transport (K), en vue d'un changement de tapis, et **en ce que** le tambour (T) correspondant soit est monté de manière amovible à une extrémité dans la construction de châssis (6) et est apte à pivoter à l'autre extrémité du tambour dans la construction de châssis (6) sur un axe de déplacement (16) situé dans celui-ci globalement transversalement par rapport à l'axe de tambour et globalement perpendiculaire au plan de transport, parallèlement au plan de transport, pour arriver dans la position de changement (P1), hors du tapis (7), dans laquelle le tambour (T) est amené à l'extérieur du conduit de transport (K) dans un espace d'évitement (21) situé dans la construction de châssis (6) à l'extérieur dudit conduit (K) et ouvert vers ce dernier, soit est apte à être détaché de la construction de châssis (6) et est apte à coulisser dans le sens de l'axe de tambour et parallèlement au sens de transport sur des guides (43) contenus dans la construction de châssis (6), latéralement hors de celle-ci et du tapis (7), jusqu'à la position de changement (P1) à l'extérieur du conduit de transport (K).

2. Convoyeur à bande selon la revendication 1, **caractérisé en ce qu'**au moins un tambour (T), dans la position de changement (P) destinée au changement de tapis convoyeur, est apte à être remplacé par un ensemble (G) qui est apte à être placé dans la construction de châssis (6) et dans lequel un tapis convoyeur de remplacement (7E) est enroulé sur un tambour d'entraînement de réserve (T) et/ou un tambour de renvoi de réserve (T), en incluant de préférence des rouleaux porteurs de réserve (12E) contenus dans ledit ensemble.

3. Convoyeur à bande selon l'une au moins des revendications précédentes, **caractérisé en ce que** les dispositifs de déplacement (S) comprennent des mécanismes de déplacement (14, 23) à actionnement de préférence mécanique ou hydraulique qui sont mis en contact avec au moins un tambour (T) pour le déplacer.

4. Convoyeur à bande selon la revendication 3, **caractérisé en ce que** quelques-uns au moins des mécanismes de déplacement (14) des dispositifs de déplacement (S) pour le changement de tapis convoyeur sont constitués par les cylindres hydrauliques de serrage de tapis du convoyeur à bande (F).

5. Convoyeur à bande selon la revendication 2, **caractérisé en ce que** l'ensemble (G) ou seulement le tapis convoyeur de remplacement (7E) est conservé dans un magasin (Z) sur le convoyeur à bande (F) ou sur l'engin de chantier (M).

6. Convoyeur à bande selon la revendication 1, **caractérisé par** des dispositifs de déplacement pour changement de tapis convoyeur (S) à actionnement semi-automatique ou entièrement automatique, intégrés de manière permanente ou au besoin dans le convoyeur à bande (F).

7. Convoyeur à bande selon la revendication 6, **caractérisé en ce que** les mécanismes de déplacement (14, 23) des dispositifs de déplacement (S) sont constitués par des vérins hydrauliques alimentés à partir d'un système hydraulique (H) du convoyeur à bande (F) et/ou de l'engin de chantier (M).

8. Convoyeur à bande selon la revendication 1, **caractérisé en ce qu'**il est prévu, pour supporter le tambour (T) au moins lorsqu'il pivote jusqu'à la position de changement (P1), dans l'espace d'évitement (21) sous le tambour (T), des guides (17, 18) aptes à être placés dans la construction de châssis (6).

9. Convoyeur à bande selon l'une au moins des revendications précédentes, **caractérisé en ce que** dans la position de changement (P1), une extrémité de tambour est apte à être libérée grâce à au moins une zone de paroi (45) de la construction de châssis (6) qui est éloignée par basculement ou démontée.
